# NEUE EUROPÄISCHE PATENTSCHRIFT

(11) **EP 0 601 681 B2**
(45) Veröffentlichungstag und Bekanntmachung des Hinweises auf die Entscheidung über den Einspruch: **28.02.2001**
(45) Hinweis auf die Patenterteilung: 05.03.1997
(21) Anmeldenummer: 93250339.4
(22) Anmeldetag: 07.12.1993
(51) Int. Cl.: B60T 13/66, B60T 17/22, B60T 8/32

(54) **Einrichtung zum Einstellen der Bremskraft an Bremsscheiben von Schienenfahrzeugen**
Device to adjust the brakeforce at brake discs of railway vehicles
Dispositif d'ajustement de la force de freinage aux disques de frein des véhicules ferroviaires

(30) Priorität: 09.12.1992 DE 4242392
(43) Veröffentlichungstag der Anmeldung: 15.06.1994
(73) Patentinhaber: MANNESMANN Aktiengesellschaft, 40213 Düsseldorf (DE)
(72) Erfinder: Keschwari-Rasti, Mahmud, D-30890 Barsinghausen (DE)
(74) Vertreter: Mattusch, Gundula

(56) Entgegenhaltungen:
- EP-A- 0 163 774
- EP-A- 0 391 047
- DE-A- 2 840 262
- DE-A- 3 543 456
- DE-C- 3 709 952

## Beschreibung

Es ist bekannt, an Bremszangen für Scheibenbremsen von Schienenfahrzeugen die jeweilige Schließkraft der Bremszange genau zu messen. Die Ausgestaltung dazu erfordert generell eine Bremszange mit zwei etwa mittig durch eine Zugstange miteinander verbundenen Bremszangenhebeln, die einerseits an eine Bremsscheibe anpreßbare Bremsbacken tragen und andererseits über je Einen Kniehebel an einem etwa parallel zur Längsrichtung der Bremszangenhebel beweglichen Betätigungsglied eines Bremskraftmotors (Elektromotors) angelenkt sind, wobei die betätigungsgliedseitigen Enden der Bremszangenhebel über etwa in deren Verlängerung verlaufende Laschen am Gehäuse des Bremskraftmotors angelenkt sind und wobei die Kniehebel mit dem Betätigungsglied über eine im wesentlichen nur in Bewegungsrichtung des letzteren verlaufende Kräfte übertragende sowie die quer hierzu verlaufende, die Enden der Kniehebel in annähernd gleichbleibendem Abstand haltende Abstützkraft zwischen diesen Enden messende Vorrichtung verbunden sind (DE-PS 35 43 456).

Diese bekannte Losung versucht die Bremskraft über die Haftreibung zwischen Bremsscheibe und den Bremsoacken (Anpreßkraft) zu bestimmen, was effektiv von dem jeweiligen Haftreibungsbeiwert abhängt. Dafür sind Kniehebel vorgesehen, die durch Aktionskrafte eines Bremskraftmotors über ein Betatigungsglied aut U-Schenkel einer besonderen Vorrichtung einwirken, wobei zwischen den U-Schenkeln, die leicht gegeneinander bewegbar sein sollen, eine Kraftmeßdose angeordnet ist. Hier sind jedoch durch Verformungen und übertragungsglieder verschiedene Meßfehler unvermeidlich.

Der Erfindung liegt das Problem zugrunde, nicht nur ein genaueres Meßergebnis für die Bremskraft zu erzielen, sondern gleichzeitig eine Korrektur einer vom Sollwert abweichenden Bremskraftgroße vornehmen zu können.

Aus der EP 0 391 047 A1 ist ein Verfahren für die Bremsenprüfung und -überwachung bei Schienenfahrzeugen und eine Vorrichtung bekannt, die aus einem an Bord befindlichen und vom Lokführer bedienten Anzeige- und Diagnosesystem besteht. Sensoren im Bremssystem jedes Drehgestells liefern Daten über Drücker im Bremszylinder, über Wege und Kräfte beim Betätigen der Bremsen. Eine Einstellung auf momentan auftretende Reibungsverhältnisse zwischen Schiene und Rad bzw. zwischen Bremsbackenbelägen und den Bremsscheiben findet jedoch nicht statt. Außerdem werden Werte für das übertragene Bremsmoment nicht gemessen. Die bekannte Vorrichtung erfüllt daher nur die Bedingungen für ein Diagnosesystem.

Aus der DE 37 09 952 C1 ist eine elektromotorische Federspeicher-Bremsbetätigungsvorrichtung, insbesondere für Schienenfahrzeuge bekannt, die eine Bremsmechanik mit Bremsgestänge und Bremsbacken aufweist. Die über ein Federspeicher-Schubrohrauge abgegebene Federspeicher-Kraft beaufschlagt die Bremsbacken im Schließsinne der Bremse mittelbar über das Bremsgestänge, wobei eine den Elektromotor in Federspeicherspannrichtung beaufschlagende, zwischen einem Mindest- und einem Höchstwert regelbare elektrische Einspeisung vorgesehen ist, die sowohl beim Spannen des Federspeichers eingeschaltet ist, als auch während des Bremshubes in Abhängigkeit von einem elektrischen Bremssignal eines von der Bremsmechanik betätigten Signalgebers wirkt. Der Signalgeber besteht aus einer wheatstoneschen Brücke, deren erster Brückenzweig ein in dem vom Federspeicher ausgehenden Bremskraftfluß angeordneter Dehnungsmeßstreifen ist. Ein zweiter variabler Brückenwiderstand ist als weiterer Brückenzweig der wheatstoneschen Brücke in Abhängigkeit von einem Bremskommando veränderbar. Mit dem Regelkreis der Bremsbetätigungsvorrichtung ist eine feinfühlige Bremskraftregelung unter Ausschaltung von durch die Bremsmechanik hervorgerufenen Störfaktoren möglich.

Die mit der Erfindung erzielten Vorteile bestehen insbesondere darin, daß die Bremskraft in allernäcnster Nähe der Bremsbacken onne Zwischenscnattung von Gelenkteilen gemessen werden kann, daß dadurch eine höchstmögliche Genauigkeit erzielt wird und daß die Korrektur der Ist-Bremskraft im Sinne der Soll-Bremskraft ebenfalls auf kurzem weg erzielt werden kann. Außerdem ist es möglich, auch nachteilig hohe Bremskräfte in Abhängigkeit weiterer Einflußgrößen zu korrigieren.

Eine vorteilhafte Ausgestaltung der Erfindung sind in Unteransprüchen angegeben.

Anspruch 1 betrifft eine Einrichtung zur Einstellung der Bremskraft an Schienenfahrzeugen, bei der eine jedem Schienenfahrzeug zugeordnete Hauptbehälterluftleitung über ein steuer- und/oder regelbares Ventilsystem an einen Bremszylinder geführt ist, der mit einem Gestangesteller versehen ist und dazu an eine Kolbenstange angeschlossenes Bremsgestange mittels zwei gegenläufiger Bremsbakken mit einer auf der Achse der Radpaare befestigten Bremsscheibe zusammenwirkt, wobei Sollwert-Signale über einen Fahrzeug-Bus und/oder eine Pulsbreitensteuerung an eine Bremssteuerung zur Verarbeitung leitbar sind und die Bremssteuerungs- Signale mittels Leitungen auf das Ventilsystem schaltbar sind.

Hierbei ist es besonders vorteilhaft, daß in dem Bremsgestänge ein Bremsmomentaufnehmer für die Messung von Dehnungs-, Zug- oder Biegekräften und zur Umwandlung in ein elektrisches Meßsignal angeordnet ist, daß die Meßsignale an die Bremssteuerung weiterleitbar und mit über den Fahrzeug-Bus erhaltenen Sollwert-Signalen eines Sollwert-Potentiometers vergleichbar sind und daß das Differenzwert-Sollsignal über das Ventilsystem an den Bremszylinder weiterleitbar ist zur Änderung des Bremsmomentes an dem Bremsbackenpaar. Hierdurch wird die erwähnte genaue Messung im allernächsten Bereich des Bremsbackenpaares ermöglicht, so daß eine dementsprechend genaue Korrektur des Ist-Wertes zum Soll-Wert stattfinden kann.

Eine Verbesserung der Erfindung besteht darin, daß der Bremsmomentaufnehmer an einer als zweiarmiger Hebel ausgebildeten Stange angeordnet ist, deren Enden an dem Bremsbacken und an der Kolbenstange angeordnet sind, wobei das gegenüberliegende Bremsgestänge an einer rahmenfesten Gelenklagerstelle und an dem anderen Bremsbacken drehgelagert und mit dem zweiarmigen Hebel mittels einer Querstange verbunden ist. Somit kann die Erfindung an bereits vorhandenen Bremssystemen von Eisenbahnwagen und anderen Schienenfahrzeugen eingesetzt, bzw. nachgerüstet werden.

Eine weitere Verbesserung der Erfindung besteht darin, daß das Ventilsystem aus einem an die Bremssteuerung angeschlossenen Proportionalventil und einem an dieses angeschlossenen Wegeventil und einem mit letzterem verbundenen Belüftungssystem bzw. Entlüftungsventil besteht, wobei das Belüftungsventil oder das Entlüftungsventil über eine Leitung und über einen Druck-Umsetzer mit dem Bremszylinder verbunden ist. Der Vorteil davon ist, daß jede beliebige Charakteristik des Druckverlaufs über das Proportionalventil gefahren werden kann; bei Defekten in der Bremssteuerung oder im Porportionalventil kann auf eine Notdruckbremsung ausgewichen werden.

In Weiterbildung der Erfindung ist vorgesehen, daß die Bremssteuerung über eine vierte Verbindung mit einem Logikelement und dasselbe über eine dritte Verbindung mit einem Elektromagneten des Wegeventils verbunden ist. Damit kann das Wegeventil unmittelbar von der Bremssteuerung aus angesprochen werden, wodurch weitere Bremsfunktionen ermöglicht werden.

In Ausgestaltung der Erfindung ist vorgesehen, daß an die Bremssteuerung eine Lasterfassung über eine Leitung angeschlossen ist. So können z.B. Gewichtskräfte unmittelbar in die Bremssteuerung über die Lasterfassung eingegeben werden.

Eine weitere Ausnestaltung sieht vor, daß an die Bremssteuerung eine Bremsarten-Erfassung über eine oder mehrere Leitungen angeschlossen ist. Auch hier wird die unmittelbare Eingabe von Bremsarten-Daten, wie Notbremse, Haltebremse u.dgl.ermöglicht.

Eine andere Weiterentwicklung der Erfindung sieht vor, daß über einen internen Datenbus an die Bremssteuerung ein Gleitschutzgerät angeschlossen ist, das über eine redundante Leitung mit der Bremssteuerung verbunden ist.

Eine vorteilhafte Verbesserung der Erfindung ist weiterhin dadurch gegegeben, daß das Gleitschutzgerät und die Bremssteuerung über den Minidaten-Bus mit einer Roll-Überwachung und mit einem Diagnosesystem in datenaustauschender Verbindung steht, wobei das Diagnosesystem über einen Verbindungs-Bus mit dem Fahrzeug-Bus datenaustauschend verbunden ist. Daraus ergeben sich die Vorteile, daß auch bei Ausfall der Bremssteuerung oder des Proportionalventils auf eine Notdruckbremsung umgeschaltet wird, so daß der Bremszylinder mit dem gewünschten Druck im Bremsfall beaufschlagt wird.

Die Erfindung ist weiterhin derart gestaltet, daß das Diagnose-System über eine sechste Verbindung mit dem Logikelement verbunden ist. Es können daher auch Schaltbefehle aus dem Diagnose-System über das Logikelement unmittelbar an den Elektromagneten des Wegeventils geschaltet werden, so daß Ausfälle anderer Bauteile behoben werden.

Der Bremszylinder kann weiterhin dahingehend gesteuert werden, daß das Diagnose-System und das Gleitschutzgerät über eine Steuerleitung mit dem Druck-Umsetzer verbunden sind. Dadurch wird die Möglichkeit eröffnet, in dem Diagnosesystem, dem Gleitschutzgerät und der Bremssteuerung zugleich die gemessenen Drücke zu kontrollieren. Sodann wird die Verzögerung des Radsatzes geprüft.

Eine weitergehende Ergänzung der Erfindung besteht darin, daß das Gleitschutzgerät über eine Leitung an ein weiteres Logik-Element angeschlossen ist, das seinerseits mit dem jeweilen Elektromagneten des Belüftungsventils oder des Entlüftungsventils signalmäßig verbunden ist. Somit können Steuerbefehle unmittelbar aus dem Gleitschutzgerät und das Belüftungsventil bzw. Entlüftungsventil auf den Bremszylinder übertragen werden.

Dasselbe Steuerungsoverfahren kann dahingehend durchgeführt werden, daß auch die Roll-Überwachung über eine Steuerleitung an das Logik-Element angeschlossen ist. Somit können auch hier unmittelbar über die Roll-Überwachung redundante Steuerbefehle an das Be- oder Entlüftungsventil und damit an den Bremszylinder gegeben werden.

Vorteilhaft ist es außerdem, daß auf der Achse für das Radpaar ein Polrad und diesem berührungslos gegenüberliegend ein Impulsgeber angeordnet sind, über dessen Signalleitung und Abzweigleitungen die aktuellen Fahrzeugdaten sowohl an die Roll-Überwachung als auch an das Gleitschutzgerat übertragbar sind. Beim Anfahren überwacht die Roll-Überwachung das langsame Anfahren bzw. Bewegen sämtlicher Achsen.

Schließlich ist vorteilhafterweise vorgesehen, daß an dem Bremsmomentaufnehmer über eine fünfte Verbindung die Roll-Überwachung und das Diagnose-System angeschlossen sind. Damit werden auch die Roll-Überwachung und das Diagnosesystem mit den jeweils genau gemessenen Bremskräften über dementsprechende Daten versorgt.

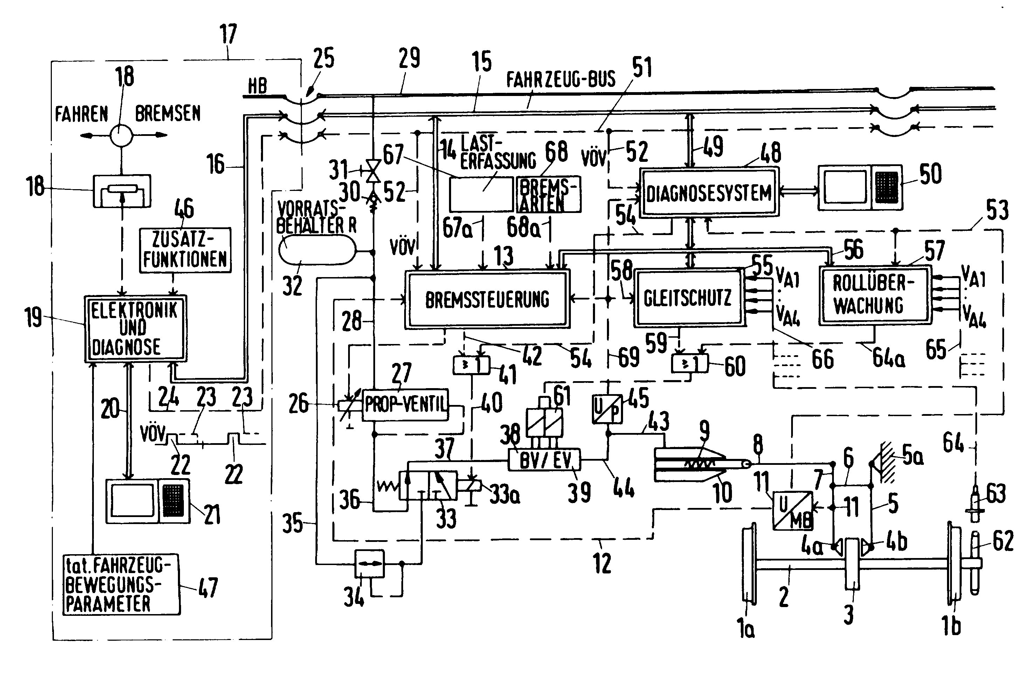

Ein Ausführungsbeispiel der Erfindung ist in der Zeichnung dargestellt und wird im folgenden näher beschrieben:
Die einzige Figur der Zeichnung zeigt ein Funktionsund Blockschaltbild der Gesamteinrichtung.

Ein auf Schienen laufendes Räderpaar 1a, 1b ist auf der Achse 2 gelagert, die auch eine Bremsscheibe 3 tragt. An den Seitenflächen der Bremsscheibe 3 greift symmetrisch ein Bremsbackenpaar 4a, 4b an, das mittels eines Bremsgestänges 5 mit einer Querstange 6 und einem zweiarmigen Hebel 7 an die Kolbenstange 8 angelenkt ist. Die Kolbenstange 8 nimmt auch einen Gestängesteller 9 auf, der das Bremsspiel ausschaltet. Die Kolbenstange 8 bzw. der Gestängesteller 9 sind in dem Bremszylinder 10 geführt. Innerhalb des Bremsgestänges 5 ist ein Bremsmomentaufnehmer 11 eingeschaltet, der z.B. eine Kraft (Dehnungskraft, Zugkraft, Biegekraft, Druckkraft u.dgl.) in ein elektrisches Signal umformt. Der Bremsmomentaufnehmer 11, der z.B. aus einem Dehnungsmeßstreifen besteht, ist über eine Verbindung 12 an eine Bremssteuerung 13 angeschlossen.

Die Bremssteuerung 13 kommuniziert über einen Verbindungs-Bus 14 mit einem Fahrzeug-Bus 15, der an den Datenbus 16 eines Führerstandes 17, z.B. einer Lokomotive, ankoppelbar ist.

Der Führerstand 17 weist neben einem Sollwert-Potentiometer 18 ein mit dem Datenbus 16 verbundenes Elektronik-Diagnose-Gerät 19, einen über einen weiteren datenbus 20 angeschlossenen Monitor 21 auf. Die Sollwert-Signale des Sollwert- Potentiometers 18 gelangen von dem Elektronik-Doagnose-Gerät 19 über eine zweite redundante Verbindung 24 (jeweils gestrichelte Linie) als Pulsbreitensteuerung 22, Pulsbreitenänderung 23 über eine Kopplung 25 in die Bremssteuerung 13 und von dieser zu einem Elektromagneten 26 eines Proportional-Ventils 27. Dieses ist durch eine Leitung 28 an eine Hauptbehälterluftleitung 29 unter Zwischenchaltung eines Rückschlagventils 30, eines Absperrventils 31 und eines Vorratsbehälters 32 angeschlossen.

Ein Wegeventil 33 ist an die Leitung 28 unter Zwischenchaltung eines Notdruckventils 34 über eine Leitung 35 angeschlossen. Von dem Wegeventil 33 sind eine Leitung 36 an das Proportional-Ventil 27 und eine Leitung 37 an ein Belüftungsventil 38 und ein Entlüftungsventil 39 geführt. Der Elektromagnet 33a des Wegeventils 33 ist ferner durch eine dritte Verbindung 40 an ein Logikelement 41 signalmäßig angeschlossen, das ebenfalls signalmäßig durch eine vierte Verbindung 42 mit der Bremssteuerung 33 zusammenwirkt.

Der Bremszylinder 10 steht sodann durch eine Leitung 43 und durch eine Leitung 44 mit einem Druckumsetzer 45 in Verbindung. Die bis hier beschriebene Einrichtung bewirkt, daß der in dem Bremsgestänge 5 (bzw. in dem zweiarmigen Hebel 7) eingeschaltete Bremsmomentaufnehmer 11 die tatsächliche Bremskraft mißt, daß die gemessene Bremskraft mit dem Bremskraft-Sollwert des Sollwert-Potentiometers 18 in der Bremssteuerung 13 verglichen wird und daß analog zu dem ermittelten Differenzwert der Druck in dem Bremszylinder 10 verändert, d.h. erhölt oder reduziert wird. Bei überschüssiger Bremskraft wird der Bremszylinderdruck soweit reduziert, daß der angepaßte Bremszylinderdruck dem jeweils aktuellen Haftreibungsbeiwert zwischen Rad 1a,1b und der Schiene entspricht.

Im Führerhaus 17 sind weiterhin an das Elektronik/Diagnose-Gerät Zusatzfunktionen 46, wie z.B für Notbremsungen, Zielbremsungen, automatische Fahr- und Bremssteuerung, Linienzug-Beeinflussung, Zugartwechsel, lastabhängige Bremsung, Schnellbremsung, Magnetschienenbremse, Bremsbeschleunigung, Lösebeschleunigung u.dgl. vorgesehen. Außerdem können über ein Gerät 47 die tatsächlichen Bewegungsparameter in das Elektronik-/Diagnose-Gerät 19 eingespeist und dort verarbeitet werden.

An dem Fahrzeugbus 15 ist ein Diagnose-System 48 für einen weiteren Verbindungs-Bus 49 an den Datenfluß angeschlossen, ebenso ein zweiter Monitor 50. Das Diagnosesystem 48 ist ferner an den Fahrzeug-Bus 15 angeschlossen, die an die zweite Verbindung 24 ankoppelbar ist. Von der Fahrzeug-Verbindung 51 verläuft außerdem eine Signalleitung 52 für die Pulsbreitensteuerung 22 (VÖV-Signale betreffend eine Bremswertvorgabe). Das Diagnose-System 48 überprüft die gesamte Peripherie und leitet die Signalwerte über den Fahrzeug-Bus 15 in den Führerstand 17. Eine Signalleitung 52 ist von der Fahrzeug-Verbindung 51 auch zur Bremssteuerung 13 geführt.

Das Diagnose-System 48 erhält auch Signale über eine fünfte Verbindung 53 vom Bremsmomentaufnehmer 11 und gibt Signale über ein sechste Verbindung 54 an das Logik-Element 41 weiter.
Als weiteres System ist ein Gleitschutzgerät 55 über einen Minidaten-Bus 56 sowhol mit der Bremssteuerung 13 als auch mit dem Diagnose-System 48 als auch mit einer Roll-Überwachung 57 verbunden. Das Gleitschutzgerät 55 ist außerdem direkt mit der Bremssteuerung 13 mittels einer Leitung 58 und mit dem Diagnose-System 48 verbunden. Außerdem führt eine Leitung 59 zu einem weiteren Logik-Element 60, das den Elektromagneten 61 der Belüftungs- und Entlüftungsventile 38 und 39 steuert.

Eine weitere Logik-Element-Leitung 64a ist von der Roll-Überwachung 57 an das Logik-Element 60 geführt.

Tatsächliche Fahrdaten werden von einem auf der Achse 2 sitzenden umlaufenden Polrad 62 und einem Impulsgeber 63 durch eine Signalleitung 64 über Abzweigleitungn 65 und 66 in das Gleitschutzgerät 55 und gleichzeitig in die Roll-Überwachung 57 geleitet.

Außerdem ist von der Lasterfassung 67 über eine Leitung 67a eine unmittelbare Verbindung zur Bremssteuerung 13 geschaffen. Ebenso besteht eine solche unmittelbare Verbindung von der Bremsarten-Erfassung 68 über eine mehrere Leitungen 68a.

Das Diagnose-System 48 wird ferner über eine Steuerleitung 69 mit den Signalen des Druck-Umsetzers 45 versorgt, wobei diese Signale über die Leitung 58 ebenfalls in das Gleitschutzgerät 55 geführt sind.

### Bezugszeichenliste

- 1a: Radpaar
- 1b: Radpaar
- 2: Achse
- 3: Bremsscheibe
- 4a: Bremsbackenpaar
- 4b: Bremsbackenpaar
- 5: Bremsgestände
- 5a: Gelenklagerstelle
- 6: Querstange
- 7: Hebel, zweiarmig
- 8: Kolbenstange
- 9: Gestängesteller
- 10: Bremszylinder
- 11: Bremsmomentaufnehmer
- 12: erste Verbindung
- 13: Bremssteuerung
- 14: Verbindungs-Bus
- 15: Fahrzeug-Bus
- 16: erster Datenbus
- 17: Führerstand
- 18: Sollwert-Potentiometer
- 19: Elektronik /Diagnose-Gerät
- 20: zweiter Datenbus
- 21: erster Monitor
- 22: Pulsbreitensteuerung
- 23: Pulsbreitenänderung
- 24: zweite Verbindung
- 25: Kopplung
- 26: Elektromagnet
- 27: Proportionalventil
- 28: Leitung
- 29: Hauptbehälterluftleitung
- 30: Rückschlagventil
- 31: Absperrventil
- 32: Vorratsbehälter
- 33: Wegeventil
- 33a: Elektromagnet
- 34: Notdruckventil
- 35: Leitung
- 36: Leitung
- 37: Leitung
- 38: Belüftungsventil
- 39: Entlüftungsventil
- 40: dritte Verbindung
- 41: Logikelement
- 42: vierte Verbindung
- 43: Leitung
- 44: Leitung
- 45: Druck-Umsetzer
- 46: Zusatzfunktionen
- 47: Gerät
- 48: Diagnose-System
- 49: Verbindungs-Bus
- 50: Zweiter Monitor
- 51: Fahrzeug-Verbindung
- 52: Signalleitung
- 53: fünfte Verbindung
- 54: sechste Verbindung
- 55: Gleitschutzgerät
- 56: interner Datenbus
- 57: Roll-Überwachung
- 58: Redundanz-Leitung
- 59: Redundanz-Leitung
- 60: Logik-Element
- 61: Elektromagnet
- 62: Polrad
- 63: Impulsgeber
- 64: Signalleitung
- 64a: Steuerleitung
- 65: Abzweigleitung
- 66: Abzweigleitung
- 67: Lasterfassung
- 67a: Leitung
- 68: Bremsarten-Erfassung
- 68a: Leitung
- 69: Steuerleitung

## Patentansprüche

1. Einrichtung zur Einstellung der Bremskraft an Schienenfahrzeugen, bei der eine jedem Schienenfahrzeug zugeordnete Hauptbehälterluftleitung (29) über ein steuer- und/oder regelbares Ventilsystem an einen Bremszylinder (10) geführt ist, der mit einem Gestängesteller (9) versehen ist und dessen an eine Kolbenstange (8) angeschlossenes Bremsgestänge (5) mittels zwei gegenläufiger Bremsbacken (4a,4b) mit einer auf der Achse der Radpaare (1a,1b) befestigten Bremsscheibe (3) zusammenwirkt, wobei Sollwert-Signale über einen Fahrzeug-Bus (15) und/oder eine Pulsbreitensteuerung (22) an eine Bremssteuerung (13) zur Verarbeitung leitbar sind und die Bremssteuerungs-Signale mittels Leitungen (28,35,36,37) auf das Ventilsystem schaltbar sind,
**dadurch gekennzeichnet, daß**
an einer als zweiarmiger Hebel (7) ausgebildeten Stange des Bremsgestänges (5) ein Bremsmomentaufnehmer (11) für die Messung von Dehnungs-, Zug- oder Biegekräften und zur Umwandlung in ein elektrisches Meßsignal angeordnet ist, daß die Meßsignale an die Bremssteuerung (13) weiterleitbar und mit über den Fahrzeug-Bus (15) erhaltenen Sollwert-Signalen eines Sollwert-Potentiometers (18) vergleichbar sind und daß das Differenzwert-Sollsignal über das Ventilsystem an den Bremszylinder (10) weiterleitbar ist zur Änderung des Bremsmomentes an dem Bremsbackenpaar (4a,4b).

2. Einrichtung nach Anspruch 1,
**dadurch gekennzeichnet, daß**
die Enden des Hebels (7) an dem Bremsbacken (4a) und an der Kolbenstange (8) angeordnet sind, wobei das gegenüberliegende Bremsgestänge (5) an einer rahmenfesten Gelenklagerstelle (5a) und an dem anderen Bremsbacken (4b) drehgelagert und mit dem zweiarmigen Hebel (7) mittels einer Querstange (6) verbunden ist.

3. Einrichtung nach den Ansprüchen 1 und 2,
**dadurch gekennzeichnet, daß**
das Ventilsystem aus einem an die Bremssteuerung (13) angeschlossenen Proportionalventil (27) und einem an dieses angeschlossenen Wegeventil (33) und einem mit letzterem verbundenen Belüftungsventil (38) bzw. Entlüftungsventil (39) besteht, wobei das Belüftungsventil (38) oder das Entlüftungsventil (39) über eine Leitung (44) und über einen Druck-Umsetzer (45) mit dem Bremszylinder (10) verbunden ist.

4. Einrichtung nach Anspruch 3,
**dadurch gekennzeichnet, daß**
die Bremssteuerung (13) über eine vierte Verbindung (42) mit einem Logik-element (41) und dasselbe über eine dritte Verbindung (40) mit einem Elektromagneten (33a) des Wegeventils(33) verbunden ist.

5. Einrichtung nach einem der Ansprüche 3 und 4,
**dadurch gekennzeichnet, daß**
an die Bremssteuerung (13) eine Lasterfassung (67) über eine Leitung (67a) angeschlossen ist.

6. Einrichtung nach einem der Ansprüche 3 bis 5,
**dadurch gekennzeichnet, daß**
an die Bremssteuerung (13) eine Bremsarten-Erfassung (68) über eine oder mehrere Leitungen (68a) angeschlossen ist.

7. Einrichtung nach einem der Ansprüche 3 bis 6,
**dadurch gekennzeichnet,daß**
über einen internen Datenbus (56) an die Bremssteuerung (13) ein Gleitschutzgerät (55) angeschlossen ist, das über eine redundante Leistung (58) mit der Bremssteuerung (13) verbunden ist.

8. Einrichtung nach einem der Ansprüche 3 bis 7,
**dadurch gekennzeichnet, daß**
das Gleitschutzgerät (55) und die Bremssteuerung (13) über den internen Datenbus (56) mit einer Roll-Überwachung (57) und mit einem Diagnosesystem (48) in datenaustauschender Verbindung steht, wobei das Diagnosesystem (48) über einen Verbindungs-Bus (49) mit dem Fahrzeug-Bus (15) datenaustauschend verbunden ist.

9. Einrichtung nach einem der Ansprüche 3 bis 8,
**dadurch gekennzeichnet, daß**
das Diagnose-System (48) über eine sechste Verbindung (54) mit dem Logik-element (41) verbunden ist.

10. Einrichtung nach einem der Ansprüche 3 bis 9,
**dadurch gekennzeichnet, daß**
das Diagnose-System (48) und das Gleitschutzgerät (55) über eine Steuerleitung (69) mit dem Druck-Umsetzer (45) verbunden sind.

11. Einrichtung nach einem der Ansprüche 3 bis 10,
**dadurch gekennzeichnet, daß**
das Gleitschutzgerät (55) über eine Leitung (59) an ein weiteres Logik-Element (60) angeschlossen ist, das seinerseits mit dem jeweiligen Elektromagneten des Belüftungsventils (38) oder des Entlüftungsventils (39) signalmäßig verbunden ist.

12. Einrichtung nach einem der Ansprüche 3 bis 11,
**dadurch gekennzeichnet, daß**
auch die Roll-Überwachung (57) über eine Steuerleitung (64a) an das Logik-Element (60) angeschlossen ist.

13. Einrichtung nach einem der Ansprüche 3 bis 12,
**dadurch gekennzeichnet, daß**
auf der Achse (2) für das Radpaar (1a,1b) ein Polrad (62) und diesem berührungslos gegenüberliegend ein Impulsgeber (63) angeordnet sind, über des-sen Signalleitung (64) und Abzweigleitungen (65,66) die aktuellen Fahrzeugdaten sowohl an die Rollüberwachung (57) als auch an das Gleitschutzgerät (55) übertragbar sind.

14. Einrichtung nach einem der Ansprüche 3 bis 12.
**dadurch gekennzeichnet, daß**
an den Bremsmomentenaufnehmer (11) übereine fünfte Verbindung (53) die Roll-Überwachung (57) und das Diagnose-System (48) angeschlossen sind.

## Claims

1. A device for adjusting the braking force on rail vehicles, in which a main vessel air line (29), associated with each rail vehicle, is guided via a controllable and/or regulatable valve system to a brake cylinder (10), which is provided with a linkage regulator (9) and the brake-rod linkage (5) of which, connected to a piston rod (8), cooperates by means of two oppositely directed brake shoes (4a, 4b) with a brake disc (3) secured on the axle of the pairs of wheels (1a, 1b), in which nominal value signals are able to be directed via a vehicle bus (15) and/or a pulse width control (22) to a brake control (13) for processing and the brake control signals are able to be switched by means of lines (28, 35, 36, 37) to the valve system,
characterised in that
on a rod of the brake-rod linkage (5) constructed as a two-armed lever (7) a braking moment pickup (11) is arranged for the measurement of expansion-, tensile- or bending forces and for conversion into an electrical measurement signal, that the measurement signals are able to be passed on to the brake control (13) and are able to be compared with nominal value signals, obtained via the vehicle bus (15), of a nominal value potentiometer (18) and that the differential value nominal signal is able to be passed on via the valve system to the brake cylinder (1) to alter the braking moment on the pair of brake shoes (4a, 4b).

2. A device according to Claim 1,
characterised in that
the ends of the lever (7) are arranged on the brake shoe (4a) and on the piston rod (8), in which the opposite brake-rod linkage (5) is rotatably mounted on a ball-and-socket joint site (5a) fixed to the frame and on the other brake shoe (4b) and is connected with the two-armed lever (7) by means of a transverse bar (6).

3. A device according to one of Claims 1 and 2,
characterised in that
the valve system consists of a proportional valve (27) connected to the brake control (13) and of a path valve (33) connected thereto, and of a ventilation valve (38) or air exhaust valve (39) connected with the latter, in which the ventilation valve (38) or the air exhaust valve (39) are connected via a line (44) and via a pressure converter (45) with the brake cylinder (10).

4. A device according to Claim 3,
characterised in that
the brake control (13) is connected via a fourth connection (42) with a logic element (41) and the same is connected via a third connection (40) with an electromagnet (33a) of the path valve (33).

5. A device according to one of Claims 3 and 4,
characterised in that
a load pickup (67) is connected via a line (67a) to the brake control (13).

6. A device according to one of Claims 3 to 5,
characterised in that
a brake type pickup (68) is connected to the brake control (13) via one or more lines (68a).

7. A device according to one of Claims 3 to 6,
characterised in that
via an internal data bus (56) an anti-skid apparatus (55) is connected to the brake control (13), which anti-skid apparatus (55) is connected via a redundant line (58) with the brake control (13).

8. A device according to one of Claims 3 to 7,
characterised in that
the anti-skid apparatus (55) and the brake control (13) are in data-exchanging connection via the internal data bus (56) with a roll monitoring arrangement (57) and with a diagnosis system (48), in which the diagnosis system (48) is connected in a data-exchanging manner via a connection bus (49) with the vehicle bus (15).

9. A device according to one of Claims 3 to 8,
characterised in that
the diagnosis system (48) is connected via a sixth connection (54) with the logic element (41).

10. A device according to one of Claims 3 to 9,
characterised in that
the diagnosis system (48) and the anti-skid apparatus (55) are connected via a control line (69) with the pressure converter (45).

11. A device according to one of Claims 3 to 11,
characterised in that
the anti-skid apparatus (55) is connected via a line (59) to a further logic element (60), which in turn is connected in terms of signals with the respective electromagnet of the ventilation valve (38) or of the air-exhaust valve (39).

12. A device according to one of Claims 3 to 12,
characterised in that
also the roll monitoring (57) is connected via a control line (64a) to the logic element (60).

13. A device according to one of Claims 3 to 12,
characterised in that
on the axle (2) for the pair of wheels (1a, 1b) there are arranged a pole wheel (62) and an impulse transmitter (63) lying opposite thereto in a non-contacting manner, via the signal line (64) of which and branch lines (65, 66) the current vehicle data are able to be transferred both to the roll monitoring arrangement (57) and also to the anti-skid apparatus (55).

14. A device according to one of Claims 3 to 12,
characterised in that
the roll monitoring arrangement (57) and the diagnosis system (48) are connected to the braking moment pickup (11) via a fifth connection (53).

## Revendications

1. Dispositif pour régler la force de freinage sur des véhicules sur rails, dans lequel un conduit d'air de réservoir principal (29) associé à chaque véhicule sur rails est mené, par l'intermédiaire d'un système de valves commandable et/ou réglable, à un cylindre de frein (10) qui muni d'un disque de timonerie (9) et dont la timonerie de frein (5) raccordée à une tige de piston (8) coopère, au moyen de deux mâchoires de freinage opposées (4a, 4b), avec un disque de frein (3) fixé sur l'essieu de la paire de roues (1a, 1b), des signaux de valeurs de consigne pouvant être amenés, par l'intermédiaire d'un bus de véhicule (15) et/ou d'une commande de durée d'impulsion (22), à une commande de freinage (13), pour leur traitement, et les signaux de commande de freinage pouvant être commutés sur le système de valves au moyen de liaisons (28, 35, 36, 37),
caractérisé en ce que, sur une barre, réalisée sous forme de levier à deux bras (7), de la timonerie de freinage (5), il est agencé un capteur de moment de freinage (11) pour mesurer des forces de dilatation, de traction ou de flexion et pour les transformer en un signal de mesure électrique, en ce que les signaux de mesure peuvent être amenés à la commande de freinage (13), et comparés avec des signaux de valeurs de consigne, obtenus par l'intermédiaire du bus de véhicule (15), d'un potentiomètre de valeurs de consigne (18), et en ce que le signal de consigne différentiel peut être amené, par l'intermédiaire du système de valves, au cylindre de frein (10) pour modifier le moment de freinage sur la paire de mâchoires de freinage (4a, 4b).

2. Dispositif selon la revendication 1,
caractérisé en ce que les extrémités du levier (7) sont agencées sur la mâchoire de frein (4a) et sur la tige de piston (8), la timonerie de freinage opposée (5) étant montée de façon rotative sur un point d'appui articulé (5a) solidaire du bâti et sur l'autre mâchoire de frein (4b), et étant reliée au levier à deux bras (7) au moyen d'une barre transversale (6).

3. Dispositif selon les revendications 1 et 2,
caractérisé en ce que le système de valves est constitué d'une valve proportionnelle (27) raccordée à la commande de freinage (13) et d'un distributeur (33) raccordé à celle-ci, et d'une valve d'évent (39) ou une valve de purge (38) reliée à ce dernier, la valve de purge (38) ou la valve d'évent (39) étant reliée, par l'intermédiaire d'un conduit (44) et par l'intermédiaire d'un transducteur de pression (45), au cylindre de frein (10).

4. Dispositif selon la revendication 3,
caractérisé en ce que la commande de freinage (13) est reliée par l'intermédiaire d'une quatrième liaison (42) à un élément logique (41) et celui-ci, par l'intermédiaire d'une troisième liaison (40), à un électroaimant (33a) du distributeur (33).

5. Dispositif selon une des revendications 3 et 4,
caractérisé en ce qu'une détection de charge (67) est raccordée à la commande de freinage (13) par l'intermédiaire d'une liaison (67a).

6. Dispositif selon une des revendications 3 à 5,
caractérisé en ce qu'une détection du type de freinage (68) est raccordée, par l'intermédiaire d'une ou plusieurs liaisons (68a), à la commande de freinage (13).

7. Dispositif selon une des revendications 3 à 6,
caractérisé en ce qu'un dispositif d'antipatinage (55) est raccordé, par l'intermédiaire d'un bus de données interne (56), à la commande de freinage (13), lequel dispositif est relié à la commande de freinage (13) par l'intermédiaire d'une liaison redondante (58).

8. Dispositif selon une des revendications 3 à 7,
caractérisé en ce que le dispositif d'antipatinage (55) et la commande de freinage (13) sont reliés, en échangeant des données, par l'intermédiaire du bus de données interne (56), à un moyen de surveillance de roulis (57) et à un système de diagnostic (48), le système de diagnostic (48) étant relié, en échangeant des données, au bus de véhicule (15) par l'intermédiaire d'un bus de liaison (49).

9. Dispositif selon une des revendications 3 à 8,
caractérisé en ce que le système de diagnostic (48) est relié à l'élément logique (41) par l'intermédiaire d'une sixième liaison (54).

10. Dispositif selon une des revendications 3 à 9,
caractérisé en ce que le système de diagnostic (48) et le dispositif d'antipatinage (55) sont reliés au transducteur de pression (45) par l'intermédiaire d'une liaison de commande (69).

11. Dispositif selon une des revendications 3 à 10,
caractérisé en ce que le dispositif d'antipatinage (55) est raccordé, par l'intermédiaire d'une liaison (59), à un autre élément logique (60) qui, de son côté, est relié, par des signaux, à l'électroaimant respectif de la valve de purge (38) ou de la valve d'évent (39).

12. Dispositif selon une des revendications 3 à 11,
caractérisé en ce que le moyen de surveillance de roulis (57) est également raccordé à l'élément logique (60) par l'intermédiaire d'une liaison de commande (64a).

13. Dispositif selon une des revendications 3 à 12,
caractérisé en ce que, sur l'essieu (2) de la paire de roues (1a, 1b), il est agencé une roue polaire (62) et, de façon opposée à celle-ci sans contact, un générateur d'impulsions (63), par l'intermédiaire de la liaison de signaux (64) et des liaisons de dérivation (65, 66) duquel les données effectives du véhicule peuvent être transmises aussi bien au moyen de surveillance de roulis (57) qu'au dispositif d'antipatinage (55).

14. Dispositif selon une des revendications 3 à 12,
caractérisé en ce que le moyen de surveillance de roulis (57) et le système de diagnostic (48) sont raccordés au capteur de moment de freinage (11) par l'intermédiaire d'une cinquième liaison (53).
